# EUROPEAN PATENT SPECIFICATION

(11) **EP 3 715 032 B1**
(45) Date of publication and mention of the grant of the patent: **22.06.2022**
(21) Application number: 20166690.6
(22) Date of filing: 30.03.2020
(51) Int. Cl.: B23D 59/00, B23D 49/16, B23Q 11/00

(54) **RECIPROCATING SAW**
STICHSÄGE
SCIE ALTERNATIVE

(30) Priority: 29.03.2019 US 201962826500 P
(43) Date of publication of application: 30.09.2020
(73) Proprietor: Techtronic Cordless GP, Anderson, SC 29621 (US)
(72) Inventor: PREUS, Michael, Piedmont, South Carolina 29673 (US); WILLIAMS, Brianna, Anderson, South Carolina 29625 (US)
(74) Representative: Novagraaf Group

(56) References cited:
- EP-A1- 1 563 936
- EP-A1- 3 000 563
- EP-A2- 1 484 127
- DE-A1-102018 102 855
- US-A- 3 938 251
- US-A- 5 878 607
- US-A1- 2004 172 833
- US-A1- 2007 251 104
- US-B1- 7 047 647

## Description

### TECHNICAL FIELD

The present application relates to power tools, and more particularly to reciprocating saws.

### BACKGROUND

Reciprocating saws may include transmissions that convert a rotary motion of a motor to a reciprocating motion of a blade. The blade of a reciprocating saw may be used to cut workpieces such as wood, brick, tile, and/or the like. Dust, debris, and the like may be produced during operation of the reciprocating saw that may impede the speed and/or efficiency of the sawing operation. Additionally, dust and debris may impede operator visibility of the blade or workpiece during sawing operations.

EP 1 563 936 represents the closest prior art and describes a reciprocating saw according to the preamble of claim 1.

### SUMMARY

In an aspect of the present application, there is provided a reciprocating saw which includes a housing, a motor within the housing, a reciprocating drive mechanism including a rotational input arranged to be driven by the motor and a reciprocating spindle to which a saw blade is attachable, and an onboard, integrated dust collection system for collecting and storing dust and debris generated by the saw blade during a cutting operation. The dust collection system includes an inlet duct, a dust container positioned downstream of the inlet duct, an outlet duct defined within the housing, a fan arranged to be driven by the motor to induce a first airflow through the outlet duct, and a vacuum port that is alternately attachable to a remote vacuum source to induce a second airflow that is different from the first airflow, the first airflow extends through the inlet duct, the dust container, and the outlet duct. The second airflow extends through the inlet duct, the dust container, the vacuum port, and into the remote vacuum source.

In one embodiment, the outlet duct is closed in response to attachment of a vacuum hose of the remote vacuum source to the vacuum port.

### BRIEF DESCRIPTION OF THE DRAWINGS

FIG. 1 is a side view of a reciprocating saw according to an embodiment of the present application.
FIG. 2 is a cross-sectional view of the reciprocating saw of FIG. 1.

### DETAILED DESCRIPTION

Before any embodiments of the present application are explained in detail, it is to be understood that the present application is not limited in its application to the details of construction and the arrangement of components set forth in the following description or illustrated in the following drawings. The present application is capable of other embodiments and of being practiced or of being carried out in various ways. Also, it is to be understood that the phraseology and terminology used herein is for the purpose of description and should not be regarded as limiting.

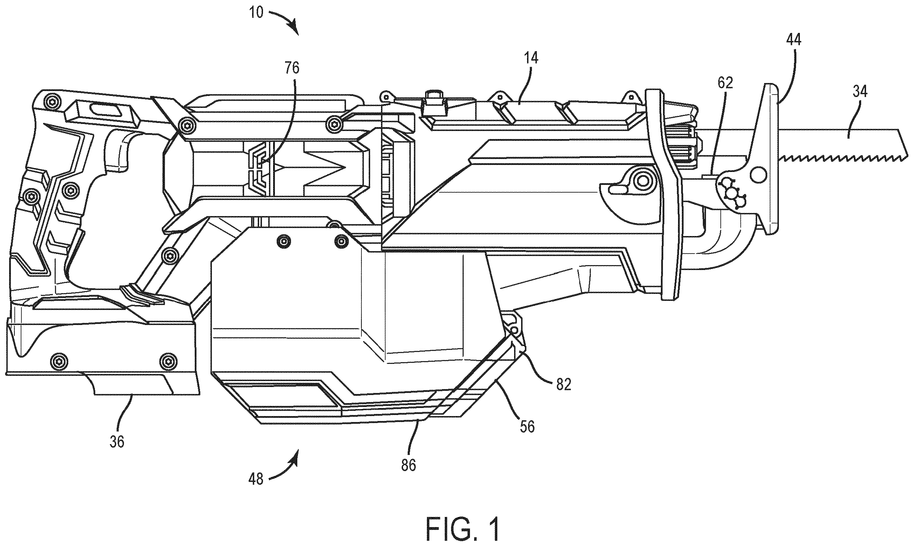

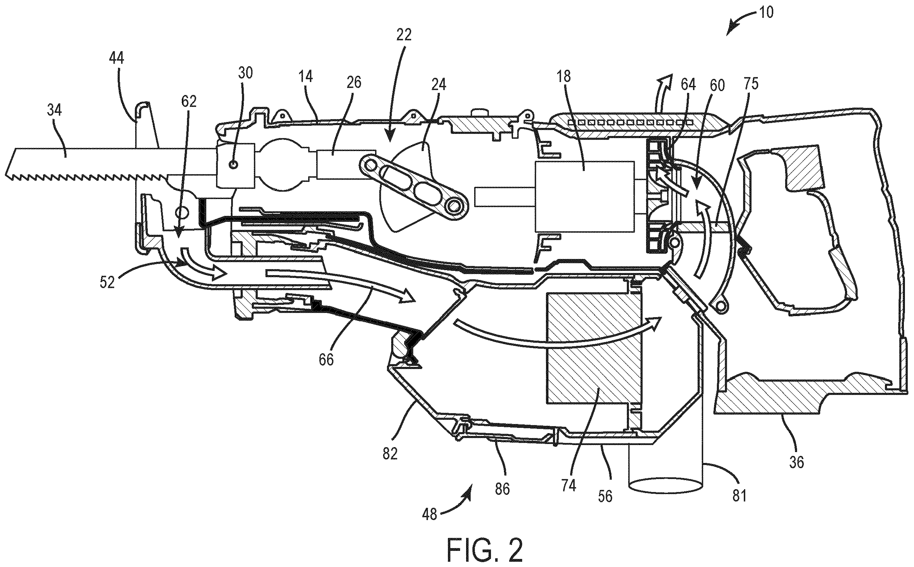

FIGS. 1 and 2 illustrate a reciprocating saw 10 including a housing 14, an electric motor 18 (FIG. 2) within the housing 14, and a reciprocating drive mechanism 22 including a rotational input 24 driven by the motor 18 and a reciprocating spindle 26 having a blade clamp mechanism 30 to which a saw blade 34 is attachable. In the illustrated embodiment, the saw 10 includes a battery receptacle 36 to which a rechargeable battery pack (not shown) is attachable for providing power to the motor 18. Alternatively, the saw 10 may include a power cord for connection to an alternating current (AC) power source.

As illustrated in FIG. 2, the reciprocating saw 10 also includes a shoe 44 or guide member operable to engage a workpiece and provide stability to the saw 10 during a cutting operation. The shoe 44 extends from the housing 14 and is located forward of the blade clamp mechanism 30 to function as a stop to limit the depth to which the blade 34 may penetrate into the workpiece. In some embodiments, the shoe 44 may freely pivot to allow the user to adjust an angle at which the blade 34 penetrates the workpiece during a cutting operation.

With reference to FIGS. 1 and 2, the saw 10 further includes an onboard, integrated dust collection system 48 for collecting and storing dust and other debris generated during a cutting operation. In other words, the dust collection system 48 is fully supported by the reciprocating saw 10. The dust collection system 48 includes an inlet duct 52 (FIG. 2) removably coupled to the housing 14, a dust container 56 positioned downstream of the inlet duct 52, an outlet duct 60 defined within the housing 14, and a centrifugal fan 64 driven by the motor 18 when activated to induce an airflow 66 through the inlet duct 52, the dust container 56, and the outlet duct 60. Referring to FIG. 2, the inlet duct 52 is positioned behind the shoe 44 relative to the motor 18. The inlet duct defines an opening 62 into the dust collection system 48. The opening 62 opens in a direction that is generally perpendicular to the reciprocating direction of the saw blade 34. In other words, the opening 62 is in facing relationship with the saw blade 34. The inlet duct is removably coupled to the shoe 44 and moveable with the shoe 44 relative to the housing 14. In other embodiments, the opening 62 may open in a direction that is oblique to the reciprocating direction of the saw blade 34 or that is parallel to the reciprocating direction of the saw blade 34.

With continued reference to FIG. 2, the dust collection system 48 includes a filter 74 (e.g., a first air filter) located in the dust container 56 to filter particulate debris of greater than a first size (e.g., greater than 2 microns, greater than 1 micron, etc.) from the airflow 66. As such, debris is prevented from moving with the airflow 66 downstream of the filter 74, causing the debris to accumulate in a portion of the dust container 56 upstream of the filter 74. The dust container 56 includes a lid 82 (see also FIG. 1) that is pivotably coupled to the rest of the dust container 56. The lid 82 may be selectively opened to empty the accumulated dust and other debris from the container 56. In alternate embodiments, the entire dust container 56 may be removable from the inlet and outlet ducts 52, 60 to empty the accumulated dust and debris. A quick-release mechanism 86 may be used to open and close the lid 82 to allow quick emptying of accumulated dust and debris.

The filtered airflow 66 downstream of the filter 74 is configured to pass through the outlet duct 60 before reaching an inlet region of the centrifugal fan 64. The airflow 66 entering the inlet region of the centrifugal fan 64 is redirected and discharged radially outward through an outlet opening 76 in the housing 14 adjacent the fan 64 (FIG. 1). The outlet opening 76 may comprise a plurality of openings through which air may be expelled from the reciprocating saw 10. Portions of the opening 76 may be shaped so that the expelled air is caused to blow away from the user to not interfere with the user during a cutting operation.

In some embodiments, the reciprocating saw 10 may include a second filter 75 positioned in the outlet duct 60 (FIG. 2). The second filter 75 may act as a secondary filter by which finer dust and/or particulate debris, having a second size smaller than the first size filtered by the primary filter (i.e., filter 74), may be removed from the airflow 66. For example, the second filter may remove particulate debris of the second size that is greater than 0.5 microns, greater than 0.10 microns, etc. Additionally, the second filter 75 may act as a primary air filter by which dust and/or particulate debris may be removed from the airflow 66 in instances where the filter 74 within the dust container 56 is not used or otherwise removed.

The dust container 56 includes an integrated vacuum port 81 to which a vacuum hose (attached to a remote vacuum source, not shown) is attachable for inducing the airflow 66 through the inlet port 52, the dust container 56, and the filter 74 instead of relying upon the fan 64 to induce the airflow 66. In use, connecting the vacuum hose to the vacuum port 81 may also close the passage between the dust container 56 and the outlet duct 60 to prevent an undesired secondary airflow from being induced in a reverse direction through the opening 76 and the outlet duct 60.

During operation of the reciprocating saw 10, the motor 18 is configured to simultaneously drive the reciprocating drive mechanism 22, for imparting reciprocation to the saw blade 34, and the centrifugal fan 64, inducing the airflow 66. The induced airflow 66 enters the inlet duct 52 via the opening 62, carrying dust and debris, generated by the saw blade 34 during a cutting operation, into the inlet duct 52. The dust and debris-laden airflow 66 then enters the dust container 56. The dust and debris then impact the filter 74, which causes the dust and debris to fall out of the airflow 66 as the air continues to flow through the filter 74 and into the outlet duct 60. Filtered airflow 66 may be routed downstream of the filter 74 and pass through the second filter 75, which removes finer dust and debris from the airflow 66, and through the outlet duct 60 before reaching the inlet region of the centrifugal fan 64. The airflow 66 enters the inlet region of the centrifugal fan 64, is redirected, and is then discharged radially outward through the outlet opening 76 in the housing 14. Alternatively, a vacuum hose may attach to the vacuum port 81 (FIG. 2) on the dust container 56, in some embodiments. The outlet duct 60 is closed in response to attachment of a vacuum hose to the vacuum port 81. For example, a portion of the vacuum hose may close or block off the outlet duct 60 upon insertion of the vacuum hose in the vacuum port 81. In this way, dust and debris may be automatically collected during a cutting operation, which improves the speed and/or efficiency of cutting operations. Further, automatically clearing dust and debris from a workpiece improves operator visibility of the saw blade 34 and a cut line on the workpiece.

In some embodiments, the airflow 66 may also be used to cool the battery pack or alternate power source, the motor 18, and/or the saw blade 34. In other embodiments, one or more additional fans may be disposed in, on, or over the reciprocating saw 10 for cooling the battery pack or alternate power source, the motor 18, and/or the saw blade 34.

Various features of the application are set forth in the claims.

## Claims

1. A reciprocating saw (10) comprising:
a housing (14);
a motor (18) within the housing;
a reciprocating drive mechanism (22) including a rotational input arranged to be driven by the motor and a reciprocating spindle (26) to which a saw blade (34) is attachable; and
an onboard, integrated dust collection system (48) for collecting and storing dust and debris generated by the saw blade during a cutting operation, the onboard, integrated dust collection system including:
an inlet duct (52),
a dust container (56) positioned downstream of the inlet duct,
an outlet duct (60) defined within the housing,
a fan (64) arranged to be driven by the motor to induce a first airflow through the outlet duct, and
a vacuum port (81) that is alternately attachable to a remote vacuum source to induce a second airflow that is different from the first airflow;
wherein the first airflow is arranged to extend through the inlet duct (52), the dust container (56), and the outlet duct (60),
**characterised in that**:
the vacuum port (81) is on the dust container (56),
the second airflow being arranged to extend through the inlet duct (52), the dust container (56) and the vacuum port (81), and into the remote vacuum source.

2. The reciprocating saw (10) of claim 1, wherein the outlet duct (60) is closed in response to attachment of a vacuum hose of the remote vacuum source to the vacuum port (81).

3. The reciprocating saw (10) of any one of claims 1 to 2, wherein the dust container includes a lid (82) that is selectively openable to empty collected and stored dust and debris from the dust container.

4. The reciprocating saw (10) of claim 3, wherein the dust container further includes a quick release mechanism (86) to open and close the lid (82).

5. The reciprocating saw (10) of any one of the preceding claims, wherein the onboard, integrated dust collection system further includes a filter (74) positioned in the dust container upstream of the outlet duct.

6. The reciprocating saw (10) of any one of the preceding claims, wherein the onboard, integrated dust collection system further includes a filter (75) positioned in the outlet duct.

7. The reciprocating saw (10) of any one of the preceding claims, further comprising a battery receptacle (36) to which a rechargeable battery pack is attachable to power the motor.

## Patentansprüche

1. Stichsäge (10), umfassend:
ein Gehäuse (14);
einen Motor (18) innerhalb des Gehäuses;
einen hin- und hergehenden Antriebsmechanismus (22), einschließlich eines Rotationseingangs, der angeordnet ist, um durch den Motor angetrieben zu werden, und eine hin- und hergehende Spindel (26), an der ein Sägeblatt (34) anbringbar ist; und
ein bordeigenes, integriertes Staubsammelsystem (48) zum Sammeln und Speichern von Staub und Schmutz, der von dem Sägeblatt während eines Sägevorgangs erzeugt wird, wobei das bordeigene, integrierte Staubsammelsystem einschließt:
einen Einlasskanal (52),
einen Staubbehälter (56), der stromabwärts des Einlasskanals positioniert ist,
einen Auslasskanal (60), der innerhalb des Gehäuses definiert ist,
einen Lüfter (64), der angeordnet ist, um vom Motor angetrieben zu werden und einen ersten Luftstrom durch den Auslasskanal zu induzieren, und
einen Vakuumanschluss (81), der abwechselnd an einer entfernten Vakuumquelle anbringbar ist, um einen zweiten Luftstrom zu induzieren, der sich von dem ersten Luftstrom unterscheidet;
wobei der erste Luftstrom angeordnet ist, um sich durch den Einlasskanal (52), den Staubbehälter (56) und den Auslasskanal (60) zu erstrecken,
**dadurch gekennzeichnet, dass:**
der Vakuumanschluss (81) sich im Staubbehälter (56) befindet,
wobei der zweite Luftstrom so angeordnet ist, dass er sich durch den Einlasskanal (52), den Staubbehälter (56) und den Vakuumanschluss (81) und in die entfernte Vakuumquelle erstreckt.

2. Stichsäge (10) nach Anspruch 1, wobei der Auslasskanal (60) als Reaktion auf das Anbringen eines Vakuumschlauchs der entfernten Vakuumquelle an den Vakuumanschluss (81) geschlossen wird.

3. Stichsäge (10) nach einem der Ansprüche 1 bis 2, wobei der Staubbehälter einen Deckel (82) einschließt, der wahlweise zu öffnen ist, um gesammelten und gespeicherten Staub und Schmutz aus dem Staubbehälter zu leeren.

4. Stichsäge (10) nach Anspruch 3, wobei der Staubbehälter ferner einen Schnelllösemechanismus (86) einschließt, um den Deckel (82) zu öffnen und zu schließen.

5. Stichsäge (10) nach einem der vorstehenden Ansprüche, wobei das bordeigene, integrierte Staubsammelsystem ferner einen Filter (74) einschließt, der im Staubbehälter stromaufwärts des Auslasskanals positioniert ist.

6. Stichsäge (10) nach einem der vorstehenden Ansprüche, wobei das bordeigene, integrierte Staubsammelsystem ferner einen Filter (75) einschließt, der im Auslasskanal positioniert ist.

7. Stichsäge (10) nach einem der vorstehenden Ansprüche, ferner umfassend eine Batterieaufnahme (36), an der ein Akkupack anbringbar ist, um den Motor zu versorgen.

## Revendications

1. Scie à mouvement alternatif (10) comprenant :
un logement (14) ;
un moteur (18) au sein du logement ;
un mécanisme d'entraînement à mouvement alternatif (22) incluant une entrée rotationnelle agencée pour être entraînée par le moteur et une broche à mouvement alternatif (26) à laquelle une lame de scie (34) peut être fixée ; et
un système intégré embarqué de collecte de poussière (48) pour collecter et stocker de la poussière et des débris générés par la lame de scie pendant une opération de découpe, le système intégré embarqué de collecte de poussière incluant :
un conduit d'admission (52),
un récipient à poussière (56) positionné en aval du conduit d'admission,
un conduit de sortie (60) défini au sein du logement,
un ventilateur (64) agencé pour être entraîné par le moteur pour induire un premier flux d'air à travers le conduit de sortie, et
un orifice d'aspiration (81) qui peut être alternativement fixé à une source d'aspiration distante pour induire un deuxième flux d'air qui est différent du premier flux d'air ;
dans laquelle le premier flux d'air est agencé pour s'étendre à travers le conduit d'admission (52), le récipient à poussière (56), et le conduit de sortie (60),
**caractérisée en ce que :** l'orifice d'aspiration (81) est sur le récipient à poussière (56), le deuxième flux d'air étant agencé pour s'étendre à travers le conduit d'admission (52), le récipient à poussière (56) et l'orifice d'aspiration (81), et dans la source d'aspiration distante.

2. Scie à mouvement alternatif (10) selon la revendication 1, dans laquelle le conduit de sortie (60) est fermé en réponse à la fixation d'un tuyau d'aspiration de la source d'aspiration distante à l'orifice d'aspiration (81).

3. Scie à mouvement alternatif (10) selon l'une quelconque des revendications 1 à 2, dans laquelle le récipient à poussière inclut un couvercle (82) qui peut être sélectivement ouvert pour vider la poussière et les débris collectés et stockés du récipient à poussière.

4. Scie à mouvement alternatif (10) selon la revendication 3, dans laquelle le récipient à poussière inclut en outre un mécanisme de libération rapide (86) pour ouvrir et fermer le couvercle (82).

5. Scie à mouvement alternatif (10) selon l'une quelconque des revendications précédentes, dans laquelle le système intégré embarqué de collecte de poussière inclut en outre un filtre (74) positionné dans le récipient à poussière en amont du conduit de sortie.

6. Scie à mouvement alternatif (10) selon l'une quelconque des revendications précédentes, dans laquelle le système intégré embarqué de collecte de poussière inclut en outre un filtre (75) positionné dans le conduit de sortie.

7. Scie à mouvement alternatif (10) selon l'une quelconque des revendications précédentes, comprenant en outre un réceptacle de batterie (36) auquel un bloc-batterie rechargeable peut être fixé pour alimenter le moteur.
